# EUROPEAN PATENT APPLICATION

(11) **EP 4 764 998 A1**
(43) Date of publication of application: **24.06.2026**
(21) Application number: 25223592.4
(22) Date of filing: 15.12.2025
(51) Int. Cl.: G06Q 30/0201, G06Q 30/0207, G06Q 30/0226

(54) **METHOD FOR CALCULATING THE DURATION OF A USAGE SESSION IN AN APPLICATION AND METHOD FOR ASSIGNING REWARDS**

(30) Priority: 18.12.2024 IT 202400028899; 08.08.2025 IT 202500021112
(71) Applicant: Myappfree S.p.a., 40026 Imola (IT)
(72) Inventor: FUZZI, Riccardo, 40026 IMOLA (IT)
(74) Representative: Puggioli, Tommaso

(57) **Abstract**

A calculation method for calculating a duration of a current usage session of an application running on a device comprises acquiring a user identifier and a timestamp for each event of the sequence of events sent by the application to the user; assigning a time to the duration of the current usage session corresponding to the time elapsed between the timestamp of a first event of the sequence of events and the timestamp of a last event of the sequence of events in the current usage session.

## Description

The present invention relates to a calculation method for calculating the duration of a usage session or a total usage time in an application and a method for assigning rewards intended, in particular, for advertising campaigns delivered by means of applications (apps) which can be installed, for example, on mobile devices.

Advertising campaigns delivered on mobile devices by means of apps preferably exploit the usage time of the app itself to deliver advertising messages to the user.

The more people who use and are active in an app and/or use it for a longer time, e.g. by playing, the greater the interest in exploiting such app for an advertising campaign, because a greater number of advertising messages can be proposed.

In this context, methods for assigning rewards, associable with an application, have been developed, so that the user is more motivated to use the app itself for a long time; such methods are substantially based on tracking the time spent by the user in the app, i.e., the duration of the usage sessions of the application.

An example of a video games help system, which offers external incentives (such as rewards) by showing advertising in response to what happens in the game, is described in US10740777.

With reference to gaming apps, other methods for assigning rewards are based on the user's progression through the game levels. Progression through levels depends on playtime; therefore, by remunerating level transitions, the user is motivated to play as long as possible using the app.

A drawback of such a method derives from the fact that it is complicated to assess the actual usage time of the app from the level transitions, and therefore to establish how and how much to reward the user.

To overcome such a drawback, methods for assigning rewards have been developed based on the actual usage time, which is a datum counted by the operating system of the device in which the app of interest is downloaded.

For example, a system that suggests a list of games to download to users is integrated in a main app.

The user can select a game from the list, download it, install it, and start playing; the system, based on the time that the user spends playing, proportionally assigns points or rewards to the user (e.g., credits or bonuses for use in the main app).

Thus, the accumulated rewards can be used directly in the main app, encouraging the user to remain active.

As mentioned, such systems exploit a function of the operating system of the device, e.g., Android, which makes it possible to determine how much time is spent in a specific app.

Therefore, in order to work, at the time of installation, the user is asked to activate this specific function and accept the terms of service, also because the user is not paid without authorization.

A serious drawback derives from the fact that the activated function, in particular on Android, allows third parties to monitor all the apps used in the device and not only the one downloaded to play, with obvious criticalities in terms of user data security.

On the other hand, it can also be considered a drawback that other operating systems, such as iOS, do not allow generalized access to app usage times, and such methods for assigning rewards cannot work. Therefore, the need for a calculation method for calculating the duration of a current usage session of an application or the usage time of an application and for a method for assigning rewards, both methods being reliable, versatile and secure for the user's data, remains unmet.

In this scenario, we propose a method for calculating or tracking the duration of a current usage session of an app or a total usage time of an app, and a method for assigning rewards, capable of overcoming at least some of the drawbacks of the prior art cited above and meeting the aforesaid need.

In particular, it is the object of the present invention to make available a calculation method for calculating the duration of a current usage session of an app or a total usage time of an app, and a method for assigning rewards based on the usage time of the apps as calculated, which are not invasive of all of the user's data and which can operate at least on the most widespread operating systems, such as iOS and Android.

This object is achieved by a calculation method for calculating the duration of a current usage session of an app or a total usage time of an app, and by a method for assigning rewards comprising the technical features set out in one or more of the appended claims. The dependent claims correspond to possible different embodiments of the invention.

According to a first aspect, the present invention relates to a calculation method, implemented by means of at least a processor, for calculating the duration of a current usage session of an application running on a device, e.g., a mobile device such as a smartphone.

In other words, the present invention relates to a calculation method, implemented by means of at least a processor, for calculating the usage time of the application running on the device.

Hereafter, reference will also be made, for the sake of simplicity of description, to playtime as the preferred example of usage time.

The present playtime calculation method is based on the time distance between the events which occur in the application, as will be clarified below.

The term "event" means, in the AdTech sector of reference, any action or signal sent by the app to the user (opening, level completion, display of a banner, etc.) with a timestamp.

The timestamps of the events are usually accessible data.

The Applicant has observed that if the events are sufficiently close to one another, i.e., the distance between consecutive events remains within a predetermined time range, e.g., 2-3 minutes, it can be considered that the user has not left the app or keeps playing, in the preferred case of a game app, in the current usage session or active session.

Advantageously, the Applicant has therefore observed that estimating the duration of the active sessions from the timestamp of the events is possible.

Following test campaigns, the Applicant has observed that, advantageously, this estimate is perceived by the user as a real measurement of playtime.

Advantageously, a reward calculation method for the user can be based on the duration of the active sessions, as calculated based on the occurrence of the events.

The usage time of an application executed on a device comprises a plurality of events sent by the application to the user.

In particular, a current usage session or active session comprises a sequence of events sent by the application to the user. The calculation method comprises acquiring a user identifier for each event of the sequence of events, so as to be able to assign the duration of the session to the specific user.

The calculation method comprises acquiring a timestamp for each event of the plurality of events.

Advantageously, a third-party function, external to the operating system and expressly authorized, installed to count what occurs in the app, can be used.

The calculation method can exploit information, which can come from another counter different from the operating system, on which to base the total playtime calculation.

The calculation method according to the present aspect can exploit information, such as timestamps or comprising timestamps, which can come from another counter different from the operating system, on which to base the total playtime calculation.

Preferably, the information comprising the timestamps is provided by a Mobile Measurement Partner (MMP) of the known type. Diagrammatically, an MMP is an external platform for advertisers which offers advanced metrics for attributing downloads and analyzing user behavior in the app.

The main function is the attribution of the installations and the in-app actions: The MMP links the installations of an app and the subsequent actions (e.g., purchases, registrations) to the digital advertising campaigns which generated them.

The MMP provides reports and dashboards that show performance metrics, such as click-through rate, conversion rate and lifetime value of the users.

Generally, any operation carried out in the app that the advertiser wants to know can be sent to the advertiser by means of the MMP.

Such operations are also sent to the ad network to which the user is assigned.

Therefore, generally, the MMPs are integrated in the apps to have the analytics data of the advertising campaigns.

Preferably, the calculation method comprises ignoring an event if it has a timestamp equal to or earlier than the timestamp of an event preceding it.

The calculation method comprises assigning a time to the duration of the current usage session corresponding to the time elapsed between the timestamp of a first event of the sequence of events and the timestamp of a last event of the sequence of events in the current usage session.

In practice, it is assumed that the application events experienced by the user can approximate the duration of the current session.

Preferably, according to the calculation method, the first event to be considered for the current usage session is an event consecutive, beyond a predefined inactivity interval between events, to an event sent by the application before the first event.

In practice, given a generic event sent by the application, the first event of the current usage session, from which to start counting the duration of the active session, is the event consecutive to the generic event if it occurs beyond the predefined maximum inactivity time.

Preferably, according to the calculation method, the current usage session is considered terminated at the last event if said last event is an event of the sequence of events preceding a consecutive event of the last event sent by the application beyond the predefined interval of inactivity between events.

In practice, if an event of the current usage session is followed by an inactivity interval during which the application does not send any event, it is assumed that such event is the last of the active session.

According to the calculation method, the first event is deemed to open the active session of the user in the application, and the last event is deemed to close such active session. As the events follow one another in the active session, the calculation method makes it possible to estimate, instant by instant, the duration of the current usage session.

Thereby, advantageously, an estimate of the usage time of the application by the user is obtained.

The event consecutive to the last event can be deemed to open a new active session consecutive to the active session closed by the last event. Preferably, "usage time" means the duration of the current session. Preferably, the predefined maximum time or inactivity interval between events is between 4 and 10 minutes, preferably equal to 7 minutes.

The maximum time or predefined inactivity interval between events can also be greater than 10 minutes or even 20 minutes, e.g., based on the type of application and/or based on the advertising campaign that uses the calculation method.

Preferably, the calculation method comprises setting a maximum duration of the current usage session.

The calculation method can comprise assigning to the duration of the current usage session the maximum duration if the time elapsed between the timestamp of the first event and the timestamp of the last event is greater than the maximum duration.

Thereby, once the maximum duration is reached, the current session does not accumulate further usage time.

Setting a maximum duration of the usage time can be useful in the event of an advertising campaign which utilizes the calculation method to avoid excessive rewards to the users.

The maximum duration can be, for example, 60 minutes. Advantageously, the calculation method allows a reliable estimate of the duration of a current usage session, identifying, in particular, a start and an end of each active session.

The calculation method makes it possible to reduce the dependence on local measurements of the client, avoiding synchronization errors.

The calculation method allows a scalable calculation, independent of the volume of events produced by the application.

According to an aspect, the present invention relates to a calculation method, implemented by means of at least a processor, for calculating a total usage time of an application running on a device, e.g., a mobile device such as a smartphone.

The total usage or playtime of a user consists of the time spent in usage or game sessions that have a start and an end.

The total playtime comprises at least a first usage session.

The first game session comprises at least a first event, which can be the start of the first game session.

The total playtime comprises a second event consecutive to the first event. The second event can be of the first game session, e.g., a level transition, or can be of a second usage or game session after the first game session, e.g., the start of the second usage session.

The calculation method comprises obtaining information comprising a usage or play time of the application in the first game session upon an occurrence of the second event.

The occurrence of the second event determines obtaining the information, which can comprise the playtime of the first game session.

Upon the occurrence of the second event, the information can comprise the time of play of the first game session and/or a usage time or playtime between the first and the second event.

Upon the occurrence of the second event, the information can comprise a playtime in the game session upon the occurrence of the second event.

Advantageously, by exploiting the occurrence of a specific event to collect the information comprising a usage time of the app, access to the data present in the user's device is strongly limited, in particular to the data of other apps different from the one executed, for which it is desired to know the time spent thereon by the user.

Information for the single event of the single app is obtainable in all operating systems and reliable with regard to the data incorporated therein.

For example, a third-party function, external to the operating system and expressly authorized, installed to count what occurs in the app, can be used.

The calculation method according to the present invention can exploit information that can come from another counter different from the operating system, on which to base the total playtime calculation.

The calculation method comprises adding the duration of the first game session to a usage time or playtime accumulated by the user to obtain the user's total playtime. The accumulated playtime may not comprise the playtime of the current or active game session.

The playtime accumulated by the user is given by the sum of the usage time in all the game sessions preceding the ongoing session and/or the considered event.

Preferably, the information upon the occurrence of the second event comprising the playtime of the first game session is provided by a Mobile Measurement Partner (MMP) of the known type.

The second event can be a start of a second usage or game session after the first game session.

For example, if, in a first game session, there are no events that are communicated to the advertiser by the MMP after the start of the first game session (considering the start of the first game session as a first event, there are no second events), there is no transmission of the information and therefore there is no information comprising the playtime of the game session.

The start of a second game session after the first can constitute the second event on the occasion of which the MMP provides the duration of the first game session.

Preferably, a start of a usage session (session event) always finalizes the usage time of the previous session.

An event during a usage session, e.g., a level transition in a game session, triggers the sending of the information comprising the usage time of the app in the ongoing usage session up to the level transition.

Given that a usage session can be interrupted at any time, it is advantageous that the start of a second session, after the interrupted one, provides the information comprising the usage time of the app in the preceding session, so that the total usage time can always be updated.

An example of a flow for the calculation or tracking of the total usage time can be diagrammatically illustrated as follows:
- for each received event:
   - if the received event initiates a new session (session event), the preceding session is finalized, namely the usage time of the preceding session is added to the accumulated usage time and the usage time of the new session is reset to zero;
   - if the received event belongs to an active current session or is not the start of a new session, the usage time in the current session is updated with the new value.

Preferably, the calculation method comprises connecting the first and the second event respectively to the first game session and to the second game session, in particular if the first and the second event are obtained in non-sequential order.

According to an aspect, the present invention relates to an electronic computer comprising at least a processor configured to execute a calculation method according to the preceding aspects.

According to an aspect, the present invention relates to a program for an electronic computer comprising instructions that, when the program is executed by an electronic computer, cause the execution of a calculation method according to the preceding aspects.

According to an aspect, the present invention relates to a method for assigning rewards to a user in an application running on a device.

The assigning method is implemented by means of at least a processor and comprises calculating the duration of the current usage session or the total usage time with a calculation method according to the preceding aspects.

According to an aspect, the method for assigning comprises calculating a payable usage time by subtracting an already paid time from the duration of the current usage session.

The assigning method comprises assigning a reward to the user as a function of the payable usage time.

Preferably, assigning a reward to the user as a function of the payable usage time comprises verifying whether the payable usage time is at least equal to a predetermined time block.

Preferably, the method for assigning rewards comprises adding the predetermined time block to the already paid usage time if the payable usage time is at least equal to a predetermined time block.

Preferably, the method for assigning rewards comprises updating the predetermined time block to a new predetermined time value, preferably greater than the preceding predetermined time value.

Preferably, the method for assigning rewards comprises verifying whether a predefined minimum time interval has elapsed since a last reward assignment, before assigning the reward to the user as a function of the payable usage time.

Preferably, the predefined minimum time interval is equal to 1 minute.

According to an aspect, a method for assigning rewards to a user as a function of a payable usage time in an application being executed on a device is implemented by at least a processor and comprises calculating the total usage time of a user with a calculation method according to a preceding aspect; subtracting a usage time already paid to the user from the total usage time, in particular upon the occurrence of the second event to obtain the payable usage time; assigning a reward to the user based on the payable usage time.

Preferably, assigning a reward to the user as a function of the payable usage time comprises verifying whether the payable usage time is at least equal to a predetermined time block.

Preferably, the method for assigning rewards comprises adding the predetermined time block to the already paid usage time if the payable usage time is at least equal to a predetermined time block.

Advantageously, a payout method based on the calculation methods in accordance with the preceding aspects is not invasive of all of the user's data, it respects the user's privacy and can operate on the major operating systems, such as iOS and Android, regardless of the accessibility of the data of the operating systems themselves, being based, for example, on the timestamp of in-app events or on other information acquirable upon the occurrence of the events. According to an aspect, the present invention relates to an electronic computer comprising at least a processor configured to execute a method for assigning rewards according to the preceding aspects.

According to an aspect, the present invention relates to an electronic computer comprising instructions that, when the program is executed by an electronic computer, cause a method for assigning rewards to be executed according to the preceding aspects.

Further features and advantages of the aforesaid aspects will become more apparent from the indicative, and therefore non-limiting, description of a preferred but non-exclusive embodiment of a calculation method for calculating the duration of a current usage session or a total usage time, by a user, of an application being executed on a device, and of a method for assigning rewards.

In a preferred embodiment, the calculation method of a total usage time according to the description integrates with a Mobile Measurement Partner (MMP) of the known type. The method for assigning rewards is based on the calculation method for calculating the total usage time.

In particular, an objective of the calculation method is to reliably track the playtime or usage time of an app by a user, and then reward the user accordingly; for the sake of simplicity, reference is made to game apps and to usage time as playtime.

Diagrammatic examples of the methods of calculation and for assigning rewards in a campaign are shown below.

### Example 1-Calculation method for calculating the duration of a usage session.

Glossary:- MMP (Mobile Measurement Partner): third-party platform that tracks installations and user behaviors in apps and notifies them to the partners that generated the installation in real time (e.g., Adjust, Appsflyer);
- Event: any action or signal sent by the app (opening, level completion, advertising banner etc.) with a timestamp;
- New Session Threshold: maximum inactivity interval between events, preferably expressed in minutes;
- Postback Interval: minimum time interval, preferably expressed in minutes, which must elapse between two reward assignments (postbacks) for the same user;
- Maximum Session Duration: limit, in minutes, beyond which a single session does not accumulate further playtime;
- Current Playtime: time accumulated by the user in the current, ongoing session;
- Paid Playtime: usage time for which the user has already received a reward;
- Unpaid Playtime: difference between a total accumulated usage time and the already rewarded usage time;
- Next Reward Block: usage time threshold, preferably expressed in minutes, upon exceeding which a reward is assigned.

The calculation method for calculating the total usage time is based on the timestamps of the events which occur during the game or the usage of the app.

According to the invention, the timestamps are preferably acquired by means of the MMP.

The MMP transmits, in particular upon the occurrence of each event, information comprising the timestamp of the event.

The calculation method comprises acquiring an identifier of the user for each event of the plurality of events, and acquiring a timestamp for each event, active or passive, attributable to the user and sent by the application, preferably by means of MMP.

In general, preferably, if an event has a timestamp preceding or equal to that of the last event acquired for the same user, it is ignored.

According to the method, the time that the user spends in the application (usage time or playtime) is estimated as a function of the timestamps of the events.

In particular, the calculation method comprises assigning to a current usage session a duration corresponding to the time elapsed between the timestamp of a first event of the sequence of events and the timestamp of a last event of the sequence of events downstream of the first event in the current usage session.

In practice, at each event of the current session, the duration of the current session is taken to be equal to the difference between the timestamp of the considered event (which at that instant is the last event) and the first event of the session itself.

The first event considered for an estimate of the duration of a current game session (Current Playtime) is a subsequent event, beyond a maximum time or predefined inactivity interval between events (New Session Threshold), to an event sent by the application before the first event.

In other words, if an event sent by the application is separated from the event that precedes it by a time greater than, preferably greater than or equal to the New Session Threshold, it becomes the first event in the sense of the event from which to count the Current Playtime of the current usage session.

Current session, ongoing session, active session all indicate the session of which the duration is being measured.

A final event, which determines the end of the current session, is an event which precedes an event of the sequence of events of the final event sent beyond the maximum time or predefined inactivity interval between events (New Session Threshold).

In other words, if an event sent by the application is separated from the event which follows by a time greater than, preferably greater than or equal to the New Session Threshold, it becomes the final event meaning that it is the event that terminates the Current Playtime of the current session.

The same event is the last event of the current session upon the occurrence of the event and it becomes the final event upon the occurrence of the next event beyond the inactivity interval.

In practice, the final event, upon closure of the current session, corresponds to the last event of the session itself.

The consecutive event of the final event opens a new active session which is consecutive to the active session closed by the final event.

The New Session Threshold is settable and, in a preferred embodiment, is comprised between 4 and 10 minutes, e.g., equal to 7 minutes.

In the exemplary case, if the timestamp of the last valid event and the current one are more than 7 minutes apart, an active session is closed and a new one is opened.

If less than 7 minutes elapse between the timestamp of the last valid event and the current one, the current event belongs to the active session.

The calculation method preferably comprises setting a maximum duration of the current usage session, e.g., 60 minutes (Maximum Session Duration).

Preferably, the calculation method comprises assigning the maximum duration to the duration of the active session, if the duration corresponding to the time elapsed between the timestamp of the first event and the timestamp of the last event is greater than the maximum duration.

It is a further object of the description an electronic computer, not shown, comprising at least a processor configured to execute a calculation method as described above.

### Example 2-Calculation method for calculating the total usage time.

- MMP (Mobile Measurement Partner): third-party platform that tracks installations and user behaviors in apps and notifies them to the partners that generated the installation in real time (e.g., Adjust, Appsflyer);
- Session ID: Unique identifier for a game session, used to distinguish different game sessions, e.g., a first game session from a second game session.
- TotalPlayTime: total game time accumulated in all game sessions, excluding a current active session.
- CurrentSessionPlayTime: duration of the current active session.
- TotalPaidPlayTime: already paid playtime, i.e., the total time for which the user has already received rewards.
- NextRangeBlock: first predetermined time block that can be paid, i.e., the first block of time spent in the app by the user (e.g., 1 min, 2 min, 5 min), upon reaching which a reward can be recognized to the user themself.
- Payout Settings: configurations that define the payout structure based on playtime, including time blocks and percentage increments.

The calculation method for calculating the total usage time is based on an incremental monitoring of the playtime provided by the events and with the events while playing or using the app.

The MMP can transmit, in particular upon the occurrence of each event, an information comprising:
- elapsed time per event: includes the time (in seconds) of the user's activity, e.g.:
- session_start → a first event is the start of a session and the time starts at 0 seconds.
- level_complete → the first event is a game level transition, the information comprises the time elapsed since the last event (for example, 45 seconds).
- total time of the session: the total time of the session at the event also to prevent residual parts of a session from being lost and to allow final adjustments;
- session ID for each event to connect the events to their respective session, even if received in non-sequential order.

If the events communicated by the MMP to the advertiser are frequent, shorter usage times can be tracked, improving the resolution of the calculation method.

The calculation method comprises assigning a unique identifier (e.g., UserID, CLickID, TransactionId) to each user, so that the usage time and the rewards are correctly assigned to the associated campaign.

An example of a flow for the calculation or tracking of the total usage time can be diagrammatically illustrated as follows:
- for each received event:
   - if the event initiates a new session (second session), it finalizes the preceding session (first session):
      - add the usage time of the first session (LastTimeSpent) to the accumulated usage time (TotalPlayTime).
      - reset the usage time of the (second) session (current active session, CurrentSessionPlayTime) to zero.
   - if the event (second event) belongs to an active current session:
      - update the usage time in the (first) session (CurrentSessionPlayTime) with the new value (TimeSpent).

An example of the method for assigning rewards can be diagrammatically described as comprising:
- verifying whether the payable usage time, i.e., the usage time not yet paid, is sufficient to complete at least one predetermined time block (e.g., 1 minute, 2 minutes);
- increasing the already paid usage time (TotalPaidPlayTime) by the number of predetermined time blocks paid in the previous step.

The calculation method for calculating the total usage time can provide updated metrics, such as the accumulated usage time and the usage time in the session.

It is a further object of the description a computer program comprising instructions which, when the program is executed by a computer, cause the execution of a calculation method as previously described.

It is a further object of the description a program for an electronic computer, comprising instructions which, when the program is executed by an electronic computer, cause the execution of a calculation method, as described above in particular in example 1 or in example 2.

It is a further object of the description a method, preferably implemented by means of at least a processor, for assigning rewards to a user in an application running on a device.

In an example, the method for assigning rewards comprises calculating the duration of the current usage session with a calculation method as described in example 1 or in example 2.

In an embodiment, the method for assigning rewards comprises calculating a payable usage time by subtracting from the duration of the current usage session a time already paid.

The method for assigning rewards comprises assigning a reward to the user as a function of the payable usage time.

The method for assigning rewards comprises calculating the payable usage time (Unpaid Playtime), subtracting from the total usage time an already paid time (Paid Playtime), and assigning a reward to the user as a function of the payable usage time.

In particular, assigning a reward to the user as a function of the payable usage time comprises verifying whether the payable usage time is at least equal to or greater than a predetermined time block (Next Reward Block). The method for assigning rewards preferably comprises verifying whether a predefined minimum time interval, e.g., 1 minute, has elapsed since a last or preceding reward assignment, before assigning the reward to the user as a function of the payable usage time.

For example, Unpaid Playtime is calculated by subtracting the time already rewarded from the total accumulated playtime.

If the Unpaid Playtime exceeds the Next Reward Block, and at least 1 minute has elapsed since the last reward notification, a new reward notification is sent.

The method for assigning rewards comprises adding the predetermined time block to the already paid usage time, if the payable usage time is at least equal to the predetermined time block, so as to update the already paid time (Paid Playtime).

Preferably, the method for assigning rewards comprises updating the predetermined time block (Next Reward Block) to a new predetermined time value greater than the preceding predetermined time value.

For example, after sending the reward, the Next Reward Block is updated based on the rules of the ongoing campaign (e.g., from 1 to 2 minutes, further from 2 to 5 minutes, etc.).

In an embodiment, a method for assigning rewards preferably comprises
- updating the predefined time block after the last paid block (NextRangeBlock) based on the payout settings established for the ongoing campaign.

For example, the payout settings can provide that the initial time blocks are short (e.g., 1 minute), to engage users, and the subsequent ones longer (e.g., 10 minutes) to achieve profitability.

The rewards can be subject to defined percentage increments for each time block, e.g.:
- 0-120 seconds → 10% increase for each 60-second block.
- 120-240 seconds → 11% increase for each 120-second block.
- maximum increase of the payout set at 200%.

The method for assigning rewards can provide that the time blocks are divisible within a payout period.

Preferably, the method for assigning rewards can return an item (UpdatePlayTimeDto) comprising:
- a sum of all the payouts calculated for the completed blocks;
- total processing time in the blocks;
- size of the next applicable block;
- percentage of increase applied to the subsequent block;
- identification attributes, e.g., of the user and the campaign.

It is a further object of the description an electronic computer, not shown, comprising at least a processor configured for executing a method for assigning rewards, as described above.

It is a further object of the description a program for electronic computer which comprises instructions that, when the program is executed by an electronic computer, cause the execution of a method for assigning rewards, as described above.

## Claims

1. A calculation method for calculating a duration of a current usage session or a total usage time of an application running on a device, the current usage session comprising a sequence of events sent by the application to a user, said calculation method being implemented by means of at least a processor and comprising
acquiring a user identifier for each event of the sequence of events; obtaining an information comprising a timestamp for each event of the sequence of events;
assigning a time to the duration of the current usage session corresponding to the time elapsed between the timestamp of a first event of the sequence of events and the timestamp of a last event of the sequence of events in the current usage session, said information being provided by a Mobile Measurement Partner (MMP).

2. A calculation method according to claim 1, wherein said first event is consecutive, beyond a predefined interval of inactivity between events, to an event sent by the application prior to the first event.

3. A calculation method according to claim 2, wherein the current usage session is considered terminated at the last event if said last event is an event of the sequence of events preceding a consecutive event of the last event sent by the application beyond the predefined interval of inactivity between events.

4. A calculation method according to claim 3, wherein the predefined interval of inactivity between events is between 4 and 10 minutes, preferably equal to 7 minutes.

5. A calculation method according to any one of the preceding claims, comprising setting a maximum duration of the current usage session, said calculation method comprising assigning to the duration of the current usage session for said user the maximum duration if the time elapsed between the timestamp of the first event and the timestamp of the last event is greater than the maximum duration.

6. A calculation method according to claim 5, wherein the maximum duration is 60 minutes.

7. A calculation method according to any one of the preceding claims, comprising ignoring an event of the sequence of events if it has a timestamp equal or prior to the timestamp of a previous event.

8. A calculation method for calculating a duration of a current usage session or a total usage time in an application running on a device, the total usage time of a user comprising at least a first usage session comprising at least a first event,
said total usage time comprising a second event consecutive to the first event,
said calculation method being implemented by means of at least a processor and comprising
obtaining an information comprising a usage time in the first usage session at an occurrence of the second event;
adding the usage time in the first usage session to a usage time accumulated by the user to obtain the user's total usage time, said information being provided by a Mobile Measurement Partner (MMP).

9. A calculation method according to claim 8, wherein the first usage session comprises the second event.

10. A calculation method according to claim 9, wherein said information comprises a usage time between the first event and the second event.

11. A calculation method according to any one of the preceding claims, wherein the second event is a start of a second usage session.

12. A calculation method according to claim 11, wherein the second usage session is consecutive to the first usage session.

13. A calculation method according to claim 11 or 12, comprising linking the first event and the second event respectively to the first usage session and the second usage session, in particular if the first event and the second event are obtained in a non-sequential order.

14. A calculation method according to any one of the claims from 8 to 13, wherein the first event is the start of the first usage session.

15. A calculation method according to any one of the claims from 8 to 14, wherein the information comprising the usage time of the first usage session is provided by a Mobile Measurement Partner (MMP) when the second event is the start of a second usage session.

16. A calculation method according to any one of the claims from 8 to 15 comprising
- for the first and the second event:
- if the second event starts a second session, concluding the first session, where concluding the first session comprises:
- adding the usage time spent in the first usage session to an accumulated usage time of the user;
- resetting to zero a usage time spent in the second session;
- if the second event belongs to the first session, said calculation method comprising
- updating the usage time spent in the first usage session based on the information comprising the usage time spent in the first usage session between the first event and the second event.

17. An electronic computer comprising at least a processor configured to execute a calculation method according to any one of claims 1 to 7 and/or a calculation method according to any one of claims 8 to 16.

18. An electronic computer program comprising instructions that, when the program is executed by an electronic computer, execute a calculation method according to any one of claims 1 to 7 or a calculation method according to any one of claims 8 to 16.

19. A method for assigning rewards to a user in an application running on a device,
said assigning method being implemented by at least a processor and comprising
calculating the duration of the current usage session with a calculation method according to any one of claims 1 to 7;
calculating a payable usage time by subtracting an already paid time from the duration of the current usage session;
assigning a reward to the user based on the payable usage time.

20. A method for assigning rewards to a user as a function of a payable usage time in an application running on a device,
said assigning method being implemented by at least a processor and comprising
calculating the total usage time of a user with a calculation method according to any one of claims 8 to 18;
subtracting a usage time already paid to the user from the total usage time upon the occurrence of the second event, to obtain the payable usage time;
assigning a reward to the user based on the payable usage time.

21. A method for assigning rewards according to claim 19 or 20, wherein assigning a reward to the user as a function of the payable usage time comprises verifying whether the payable usage time is at least equal to a predetermined time range block.

22. A method for assigning rewards according to claim 21, comprising adding the predetermined time block to the previously paid usage time, if the payable usage time is at least equal to a predetermined time block.

23. A method for assigning rewards according to claim 21 or 22, comprising updating the predetermined time block to a new predetermined time value greater than the previous predetermined time value.

24. A method for assigning rewards according to any one of claims 19 to 24, comprising verifying whether a minimum predefined time interval has elapsed since a last reward assignment before assigning the reward to the user as a function of the payable usage time.

25. A method for assigning rewards according to claim 24, wherein the minimum predefined time interval is equal to 1 minute.

26. An electronic computer comprising at least a processor configured to execute a method for assigning rewards according to any one of claims 19 to 25.

27. An electronic computer program comprising instructions that, when the program is executed by an electronic computer, execute a method for assigning rewards according to any one of claims 19 to 25.
